# EUROPEAN PATENT APPLICATION

(11) **EP 4 485 110 A1**
(43) Date of publication of application: **01.01.2025**
(21) Application number: 24185545.1
(22) Date of filing: 28.06.2024
(51) Int. Cl.: G05B 23/02

(54) **MONITORING OF PUMPING SYSTEMS**

(30) Priority: 29.06.2023 GB 202309923
(71) Applicant: Stuart Turner Limited, Henley-on-Thames Oxfordshire RG9 2AD (GB)
(72) Inventor: UPASANE, Shreyas, Henley-On-Thames, RG9 2AD (GB); HAGRAS, Hani, Colchester, CO4 3SQ (GB); SAVILL, Stuart, Henley-On-Thames, RG9 2AD (GB)
(74) Representative: Dehns

(57) **Abstract**

There is described a pump monitoring system 100 for monitoring at least one pumping system 105a, 105b; the system comprising: a fuzzy logic system 110 configured to: receive operating data associated with the at least one pumping system 105a, 105b; and analyse the operating data using fuzzy-logic to provide output data indicative of a current status of the at least one pumping system 105a, 105b; wherein the fuzzy logic system 110 comprises a set of rules; and wherein the fuzzy logic system 110 is configured to perform self-learning whilst in operation by adjusting the set of rules. The use of the fuzzy logic system 110 allows maintenance engineers 20 to be more confident in the output of the monitoring system as it allows the user 20 to identify any biases or errors in the model, allowing for these to be corrected or adjusted before maintenance implementation and also allowing for easier correction and adjustment (i.e. learning) of the model.

## Description

### Technical field

This invention relates to the monitoring of pumping systems for maintenance purposes using fuzzy-logic artificial intelligence systems.

### Background

Industrial systems require regular maintenance to sustain productivity and prevent failures impacting on required service levels. Effective maintenance is essential for the reliability and performance of systems and it can help to prevent costly downtime caused by equipment failure. Pumping systems, particularly water pumping systems are examples where maintenance of the system is critical. Such pumping systems are used in various applications, e.g. freshwater supply, grey/black water removal, and heating & cooling applications. Whilst their exact usage may vary, water pumping systems are typically required to move the pumped fluid at the required rate as efficiently as possible. Inefficiency in the equipment can result in reduced water supply or reduced processing of water. Equipment failure can result in a complete loss of supply or processing until maintenance is completed. This can be expensive in terms of lost revenue, but can also lead to unsafe conditions. Appropriate maintenance is therefore very important.

Pump systems generally consist of a motive power source, which rotates an impeller assembly that could be of any suitable type, such as axial flow, regenerative, or centrifugal design, or the pump may have a metering system, or a positive displacement design. Sensors and controls establish when and how the pump should run. Each aspect of the system needs to operate correctly for the system to be efficient.

Conventional maintenance can include examining, cleaning, repairing, and replacing items, as well as arranging routine servicing, i.e. preventative maintenance. An alternative approach is to fix problems only once they have already arisen, i.e. reactive maintenance. Both of these approaches have advantages and disadvantages. When reactive maintenance is performed, a maintenance worker is required to visit the site of the pumping system, investigate the cause of the failure, then often return at another time with the correct part to fix the problem in the system. Meanwhile, the system may be in operation or operating at reduced output. Regular preventative maintenance has often been performed to avoid the additional costs and problems associated with reactive maintenance. However, while this can vastly reduce system shut-down due to failures, often it means maintenance is performed on systems which are running well, i.e. where no maintenance is actually required. This is also costly and inefficient. There is an increased need for improved monitoring of pumping systems to reduce unnecessary routine servicing, whilst also reducing the occurrence of system failures. Many systems now use condition-based maintenance, where instead of relying on scheduled maintenance, a computer system can evaluate the actual use of assets so that maintenance can be completed at appropriate and convenient times for the pumping system, the users of the pumping system, and the maintenance engineer. However, this approach is often still insufficient, as it does not take into account current operating conditions, only the accumulated operational time.

Some modern maintenance systems now take a more predictive approach, where system maintenance and operations are made as efficient as possible by considering the current operating status of equipment and systems. Such predictive maintenance systems require the acquisition of operating data and robust analytical methodologies. Predictive maintenance allows a maintenance system to detect faults well before emergency intervention is required. This can increase productivity, reduce equipment breakdowns and save maintenance expenses.

The development of Artificial Intelligence (Al), Internet of Things (IoT) and cloud computing has led to a shift in how maintenance is managed, with an increased focus on machine learning, especially deep learning. However, commonly used techniques use black-box AI models which provide good accuracy in their analysis, but are complex and difficult to understand. This makes it hard for equipment operators to gain trust in the system and hinders development and engagement.

### Summary

According to a first aspect of the invention, there is provided a pump monitoring system for monitoring at least one pumping system; the system comprising:
a fuzzy logic system configured to:
receive operating data associated with the at least one pumping system; and
analyse the operating data using fuzzy-logic to provide output data indicative of a current status of at least one pumping system;
wherein the fuzzy logic system comprises a set of rules; and
wherein the fuzzy logic system is configured to perform self-learning whilst in operation by adjusting the set of rules.

According to a second aspect of the invention, there is provided a pump monitoring system for monitoring at least one pumping system; the system comprising:
a fuzzy logic system configured to:
receive operating data associated with the at least one pumping system; and
analyse the operating data using fuzzy-logic to provide output data indicative of a current status of at least one liquid pumping system.

Fuzzy logic is a so called "white-box" Al model which allows an end user to understand how the model reaches a particular decision or prediction. This contrasts with "black-box" Al systems such as convolutional neural networks (CNNs) and the like in which inputs are transformed into outputs on an opaque and hard-to-trace manner. The use of the fuzzy logic system allows maintenance engineers to be more confident in the output of the monitoring system as it allows the user to identify any biases or errors in the model, allowing for these to be corrected or adjusted before maintenance implementation and also allowing for easier correction and adjustment (i.e. learning) of the model.

Fuzzy logic systems aim to replicate human conditional logic. They are designed around the concept of imprecise and uncertain modelling. Instead of using exact numeric inputs (typically referred to as crisp inputs), they operate on fuzzy inputs which are essentially broader, linguistic, descriptive inputs. For example, instead of dealing with a numeric (i.e. crisp) value in a range of 0-20, a fuzzy logic system converts the crisp input into linguistic inputs such as HIGH, MEDIUM, LOW. In other words, the inputs take a more human-readable form and are thus more interpretable by the users.

Fuzzy logic systems then use rules (typically in the form of IF-THEN statements) using the fuzzy inputs (interpretable with their linguistic labels), to handle uncertainty in the input information while being easily understood by any user or analyst. This in turn allows users to gain trust in the generated model by having transparency, showing causality, reducing bias, and increasing safety.

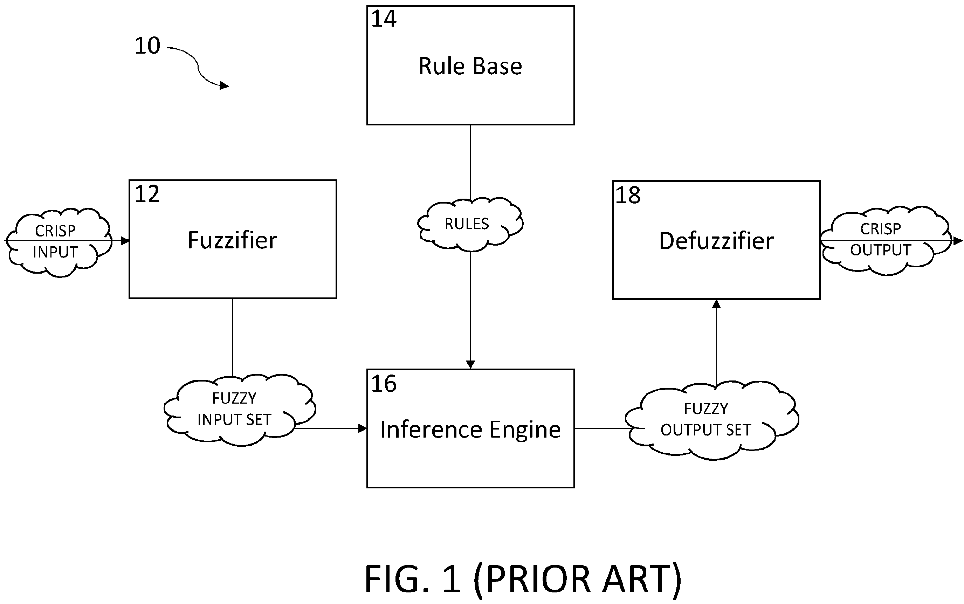

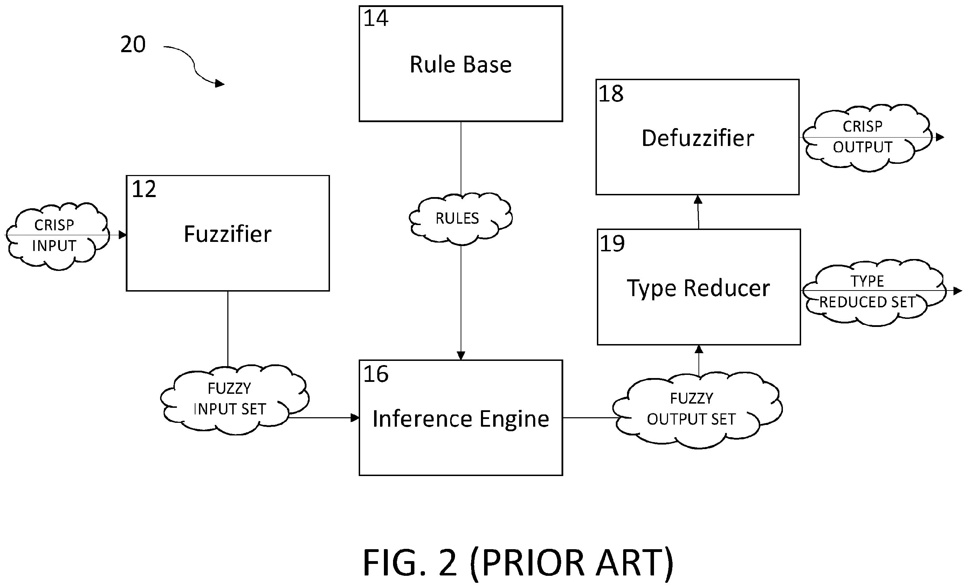

The basic mathematics of fuzzy logic systems, including fuzzifying the inputs using membership functions, processing those inputs via a rule base and an inference engine, and defuzzifying the outputs into crisp output values is well known and well described in literature and so is not set out here. Basic architectures of both type 1 and type 2 fuzzy logic systems are shown in Figures 1 and 2 respectively.

By using a fuzzy logic system, the invention can take operating data associated with the at least one pumping system and produce an accurate prediction of required maintenance in advance of actual failure, while also producing understandable outputs which can inform a user in an explainable manner what the current operating conditions of the at least one pumping system mean in relation to the predicted required maintenance. Thus, the maintenance engineer can assess the model's output and prediction and either proceed with confidence in the proposed maintenance or adjust the proposed maintenance based on experience. The combination of accurate AI prediction with the explainability of the fuzzy logic system allows for a combined approach in which machine insights and human insights can both be taken into account for optimal maintenance.

For comparison, the inventors have found that "black box" AI prediction systems such as neural nets and stacked autoencoders can produce marginally more accurate predictions, but the opaque nature of those systems makes them less trustworthy and does not allow for human insights to be combined with the Al output. On the other hand, the fuzzy logic system has been found to produce significantly more accurate results, almost as good as the black box AI systems, when compared with other explainable AI systems such as Decision Tree models. Therefore, the fuzzy logic system has been found to be a particularly advantageous choice for predictive maintenance.

As discussed above, in pumping system maintenance, it is highly desirable for all equipment to be working at all times, but the environment in which it functions can be unpredictable. For example, water pumping systems have to respond to varying demand patterns as well as changing climate conditions like drought. When an artificial intelligence model has been trained in advance, such new changes to the system may not match the trained model's supervised learning, i.e. when that model is exposed to a new environment, it may not produce accurate results. The self-learning of the system described here allows the system to constantly alter the fuzzy logic system to adapt to changing environments and circumstances.

The self-learning of the fuzzy logic system emulates learning techniques used by humans. In contrast to other machine learning systems such as neural nets which require re-training to be able to adapt paraments to new environments or new faults, the fuzzy logic system of the present invention can optimize its own analysis engine with minimal human input and without requiring significant and time-consuming retraining.

In some examples, adjusting the set of rules comprises at least one of:
i) adding at least one new rule to the set of rules;
ii) discarding at least one rule from the set of rules;
iii) modifying at least one rule in the set of rules.

These various adaptation methods of the set of rules implement psychological concepts like learning, forgetting, and short-term and long-term memory into an adaptive fuzzy rule base to make a "living" artificial intelligence model with high accuracy and good explainability.

It will be appreciated that the fuzzy logic system can receive any type of input from a user e.g. information as to the accuracy of a maintenance prediction. For example, after a site visit a maintenance engineer may feed back to the system that the prediction was correct or incorrect and may feed back what the correct analysis should have been. The fuzzy logic system can match this new information with the operational data leading up to the maintenance and can use this to perform self-learning by adapting the set of rules. In some examples the feedback from the user comprises either a confirmation that the output data was accurate or an indication that the output data was inaccurate. In some examples the feedback comprises an indication that the explanation of a cause did not match the operating data. In some examples the feedback comprises an indication that the severity of the fault was mis-identified. Newly adapted rules can be optimised over time to model more accurately the at least one pumping system within its particular environment. Accordingly, in some examples the system is further configured to receive user feedback and to perform the self-learning based on the user feedback. It will be appreciated that some pumping systems may be arranged to monitor and detect replacements of components, which can feed back to the fuzzy logic system without direct user feedback. In some examples the system is configured to perform the self-learning based on operating data received from at least one pumping system. In some examples, the system is configured to receive both user feedback and operating data from the at least one pumping system to perform the self-learning.

In some examples, a new rule (or rules) is required to provide a correct output for a previously unknown consequence of given input operating data. In this situation additional rules may be added to the set of rules, thereby expanding the knowledge of the system to encompass the new scenario. When the similar input data is received in the future, the new rule will activate, providing an appropriate maintenance suggestion (note that an appropriate maintenance suggestion may be either to take a certain maintenance action to correct a fault, or it may be to take no action as the system is normal).

In some examples, rules in the set of rules can be modified, e.g. to change the threshold for a given output. For example, it may be that during original training a rule required a high temperature to indicate an ineffective pump, but it may later be realised that the a medium-high temperature should be indicative of an ineffective pump. In this case the antecedent of the corresponding IF-THEN statement can be modified from High to Medium-High. Similarly, it may be that a consequent of the logic IF-THEN statement needs to be modified, e.g. to indicate that a High temperature is indicative of normal operation rather than being indicative of a fault.

In some examples, rules from the set of rules can be discarded. This may be because the rule is no longer required, e.g. because it is superseded by a newly added rule. Alternatively, it may be because the rule was based on a condition (e.g. a temporary condition) that no longer exists, so the rule can be "forgotten". Discarding at least one rule from the set of rules may be performed by the system by identifying and removing rules that are at least one of: rarely used or activated; and/or never used; and/or superseded by newer rules.

In some examples, the system may be configured to monitor the frequency of activation of each rule in the set of rules. The self-learning may then comprise discarding a rule with a frequency under a given frequency threshold. In this way, the most used rules are given more weight, while unused and rarely used rules are more susceptible to discard. In some examples different rules may be given a different level of importance. For example, some rules may be considered to be important even though they are not used often. This may for example be the case for a rare, but severe fault. Such rules should ideally not be forgotten and/or discarded. Thus, each rule may be associated with a level of importance and rules with different levels of importance may have difference frequency thresholds. In this way, unimportant rules can be efficiently deleted, whilst important rules that are only activated in for example a particular dangerous situation will be safely kept. In this manner the system can improve over time and increase efficiency, whilst ensuring the enhanced safety of the at least one pumping system.

Whilst the above examples describe scenarios where the fuzzy logic system interprets inputs to perform self-learning, in some examples the user can directly adapt the set of rules, for example by adding, deleting or amending a rule in the set of rules. This can be used to supplement the self-learning of the fuzzy logic system.

It will be appreciated that whilst certain detected parameters will be indicative of a certain problem, or a particular failure in a pumping system, there can be a large amount of uncertainty. This can arise because the model only has access to a limited amount of information, e.g. it depends on how many parameters are being monitored and how they are being monitored. Uncertainty can also arise from errors in detected measurements intrinsic to the devices which produce the data. For example, a temperature sensor may have a nominal error of ±0.5°C. Uncertainty can also exist in how the model was trained. Such uncertainties are inherent in all real world systems and data sets and can significantly impact the ability of the model to provide accurate output data. As discussed above, the inventors have appreciated that fuzzy logic systems are advantageous. However, even within fuzzy logic systems, the inventors have found that type-1 fuzzy logic systems have a more limited ability to model and minimise uncertainties in input data. A type-2 fuzzy logic system may therefore be used. Therefore, in some examples, the fuzzy logic system is a type-2 fuzzy logic system. An interval type-2 fuzzy logic system has been found to be particularly beneficial. Such systems are well known, but their particular benefit in an explainable AI system for predictive maintenance has been recognised here.

Different industries, buildings and businesses have different requirements for pumping systems. Some may use only a single pumping system. Others may use multiple pumping systems simultaneously, e.g. for different purposes. In some examples the system is configured to monitor at least one pumping system in a single location. In some examples the system is configured to monitor a plurality of pumping systems. In some examples the system is configured to monitor a plurality of pumping system in a plurality of locations, optionally with some locations having a plurality of pumping systems. Locations can include any of the following: residential buildings, commercial buildings, industrial buildings or areas and/or agricultural buildings or areas. In some examples, the at least one pumping system comprises a plurality of water pumping systems in a building. It will be appreciated that the system of the present invention can be used by a pumping system manufacturer or maintenance company to monitor pumping systems from multiple different locations, not just those of an individual client or user. As all the pumping systems use the same fuzzy logic system, its self-learning has a much larger quantity of data to learn from and so will become more accurate more quickly. The fuzzy logic system can categorise different pumping systems to optimise the set of rules for each different type of system (e.g. rules may depend one or more particular systems and thus may essentially allow different rules for different systems).

In some examples, the at least one pumping system comprises at least one domestic water supply system. In some examples the at least one pumping system comprises at least one water booster set and/or at least one pressurisation unit. A water booster set is a system used to increase water pressure in a building or home and can be used in areas where mains water supplies lack sufficient pressure to meet the needs of a building. Such water booster sets can comprise a pump, a pressure tank, and a controller. The pump is used to increase the pressure of the water and the pressure tank stores water at a high pressure so that it can be used when required. Pressurisation units (also known as pressurisation pumps or pressurisation systems), can be used to maintain a constant liquid pressure in a system (e.g. in a heating or cooling system). Pressurisation units can comprise a pump, a pressure tank, and a controller. The pump is used to increase the pressure in the system. Water booster sets and pressurisation units are useful for ensuring a reliable and consistent fluid supply.

Pumping systems can develop problems in many forms. Some symptoms of problems include, but are not limited to: the outlet pressure being incorrect, (e.g. too high or too low); the flow rate being incorrect (e.g. too high or too low); a pump leaking, making noise, or consuming too much energy for the work being produced; a pumping system may become inefficient when cavitation (voids or bubbles) form in the fluid surrounding the impeller as the localised fluid stresses become too high; wear within a pumping system could cause the fluid to bypass internally, reducing efficiency and inducing heating.

In some examples the system further comprises one or more sensors configured to acquire the operating data from the at least one pumping system. In some examples the operating data is acquired directly from a controller of the at least one pumping system. The system can either use specifically installed sensors to monitor the pumping system, or it can use data already being collected by the pumping system itself to monitor the system (i.e. data from software and/or operational sensors), or it can use a combination or data from both sources.

In some examples, the one or more sensors comprises one or more of: a pressure sensor, a temperature sensor, a vibration sensor, an acoustic sensor, a flow rate sensor, and a current sensor. It will be appreciated that different types of sensor can monitor different aspects of pumping system operation. For example, a current sensor may provide data indicative of the power drain on a specific component, and/or may provide data indicative of equipment run times and/or start and stop times (e.g. by detecting large magnitude changes in current). A vibration sensor or acoustic sensor may be able to tell what type of fault is developing from the type (e.g. amplitude or frequency) of vibration a piece of equipment is exhibiting, or a particular tone (frequency) or volume (amplitude) of a noise.

In some examples the system further comprises at least one controller configured to collect the acquired operating data from the or each pumping system and transmit the operating data to the fuzzy logic system. It will be appreciated that the system may comprise a controller for each individual pumping system. Each controller may then be a local controller arranged on site with the pumping system to collect operating data from that pumping system. The at least one controller may be configured to receive operating data from the one or more sensors. Each local controller may receive operating data from the local sensors of its pumping system. The controller may be integral to the pumping system. For example, it may also be the pumping system's controller for general control of the pumping operation. Alternatively, the controller may be a dedicated monitoring controller separate from the pumping controller. Such a dedicated controller may receive operating data directly from a pumping controller associated with the pumping system, e.g. to acquire at least some operating data, such as pressure data, flow data, current data (for determining start/stop times) which is acquired as part of normal pumping control. Additional data from additional sensors (e.g. from vibration sensors, acoustic sensors, ultrasound sensors, etc.) may feed operating data directly to the dedicated controller.

In some examples the fuzzy logic system is located on a cloud computing system. In some examples, the system utilizes internet of things technology (IoT).

In some examples operating data is transmitted directly from the at least one pumping system and/or the sensor(s) to the fuzzy logic system. In some examples the controller collates the operating data and transmits the acquired operating data to the fuzzy logic system. The controller may transmit all operating data to the fuzzy logic system.

It will be appreciated that whilst cloud computing can have vast amounts of computer memory and processing power, loT devices often have restrictions, for example memory constraints and/or processing power constraints and/or power consumption constraints. Additionally, sending continuous operating data can be impractical due to large data sets and bandwidth limitations. IoT data generated by the sensors can be almost entirely sequential and be very large data sets with large numbers of repetitions, and with large amounts of noise that can overwhelm important data points. In some examples the controller is further configured to pre-process at least some of the acquired operating data before transmitting the operating data to the fuzzy logic system. In some examples, the controller is configured to pre-process the acquired operating data using a Fast Fourier Transform (FFT). For example, the controller may be arranged to transform vibrational or acoustic data from the time domain into the frequency domain. Frequency domain information can provide more useful information to the fuzzy logic system regarding the status of the monitored equipment. Frequency domain data can also more readily be reduced in size before transmission to focus on the most relevant data. In some examples, the controller is configured to pre-process the acquired data using hardware on the controller. For example, hardware FFT processing can achieve significant speed improvements over software FFT. Therefore, in some examples the controller comprises a hardware FFT processor arranged to process at least some of the operating data before transmission to the fuzzy logic system. By pre-processing the acquired operating data before transmitting, the requirements of the cloud computing server are reduced, and the fuzzy logic system can be more efficient. In some examples the acquired operating data is sampled using windowing techniques before using a FFT. The use of a windowing technique can reduce the effects of spectral leakage.

The output data indicative of a current status of at least one pumping system can be a simple indication as to the current condition of the at least one pumping system reflecting a condition-based monitoring system. However, in some examples the system is configured to provide predictive maintenance, e.g. the output data may comprise data representative of required maintenance. The output data may comprise information regarding predicted faults. Such predictions may include a degree of urgency, e.g. a severity of the fault and/or a predicted time to failure. This can help with scheduling a maintenance visit in the most efficient manner, e.g. whether to dispatch an engineer immediately or whether to schedule maintenance on a less urgent and more convenient timescale.

In some examples, the system comprises a rule post-processing engine. The rule post-processing engine may comprise a look-up table which may comprise associations between rules of the set of rules and maintenance explanations and/or recommendations. The system may be arranged to use the look-up table together with activated rules from the set of rules to provide maintenance explanations and/or recommendations to the user. By using a rule post-processing engine, output data can be presented to a user in easy to understand linguistic terms which explain the output by contextualising a piece of data against a given status of the at least one pumping system. This builds upon the explainability nature of fuzzy logic systems and takes it a step further by extracting the explanations from the fuzzy logic system (i.e. the rules that were triggered or activated by the inputs to result in the current output) and translating those into a more directly readable and understandable format for a maintenance engineer. The look-up table can be created with the input of expert maintenance engineers to provide suitable information to the user. In some examples faults in the at least one pumping system can be classified into different categories using the post-processing engine. In some examples the faults and/or required maintenance can be classified into two categories, in some examples the faults and/or required maintenance can be classified into more than two categories. In some examples the faults and/or required maintenance are classified as either "NORMAL & MARGINAL" or "SEVERE". These may distinguish between urgent maintenance (e.g. 24/7 call out) and less urgent maintenance (e.g. scheduled for normal business hours). This could of course be divided further, e.g. to distinguish between next day maintenance and non-urgent servicing, or within a given timeframe such as "within a week", "within a month", etc. In some examples, the output data comprises values and/or linguistic information representative of a level of severity of a predicted fault (e.g. a traffic light system). The fuzzy logic system can therefore indicate a predicted time to failure given a current operating condition of any given pumping system. In some examples the output data can comprise information for a user, including at least one of: an explanation of cause of a fault and/or failure; and/or suggestions as to what part of the pumping system may need replacing; and/or suggestions as to what equipment may be required by an engineer to perform any required maintenance; and/or a suggested repair process. For example, the system can inform the engineer which spare parts will be required for the maintenance and/or which tools/equipment are required for the maintenance and/or how to perform the repair so that the engineer can fix the pumping system efficiently in a single visit.

In some examples a user can input information regarding actual performed maintenance, and the trained software model can interpret the actual performed maintenance whilst performing self-learning. In some examples received operating data which invalidates a previous conclusion given in output data can be used to perform self-learning.

According to a third aspect of the invention there is provided a method of predicting maintenance in at least one pumping system, the method comprising:
receiving operating data from at least one pumping system;
inputting the operating data into a fuzzy logic system;
analysing the operating data using fuzzy logic; and
providing output data indicative of a current status of the at least one pumping system;
wherein the fuzzy logic system comprises a set of rules; and
wherein the fuzzy logic system performs self-learning whilst in operation by adjusting the set of rules.

According to a fourth aspect of the invention there is provided a method of training a fuzzy logic system; the method comprising an initial training phase comprising:
receiving training operating data relating to at least one pumping system, the training operating data comprising operating data with associated maintenance information;
extracting a plurality of fuzzy-rules from the training operating data; and
constructing a set of rules for the fuzzy logic system from the plurality of fuzzy-rules;
wherein the method further comprises a self-learning phase comprising:
   receiving user feedback while in operation; and
   adjusting the set of rules based on the user feedback.

It will be appreciated that any of the preferred and/or optional features discussed above in relation to the first and second aspects may equally be applied in the methods of the third and fourth aspects.

In some examples, the set of rules that is initially extracted is very large in number and is subsequently optimised to reduce the number of rules down to a manageable level. Although many optimization techniques exist, in some examples, optimization is performed using a big-bang big-crunch optimization algorithm. The big-bang big-crunch optimization algorithm (BB-BC) is a heuristic algorithm alternating between two phases of optimization: expansion and compression. In the expansion phase, the algorithm generates a large number of candidate solutions and explores the search space. In the compression phase, the algorithm selects a smaller number of the best solutions and focuses on refining them. This allows the algorithm to find high-quality solutions with a high convergence speed. The BB-BC algorithm can be used only after the initial construction of the rule-base (i.e. the set of rules). In some examples, the BB-BC algorithm is used periodically, to optimize the adapted rule base resulting from the self-learning.

Inefficient sampling, uncertainty, and other types of error in data training sets can sometimes lead to the fuzzy logic system producing false positives (i.e. predicting faults when it should not have done) and false negatives (i.e. predicting no faults when an actual fault was present). False positives are more tolerable, but in critical systems false negatives can be very costly. It is therefore preferable that the fuzzy logic system produces minimal false negative results to avoid expense for genuine defects which could have been corrected, but are missed when a fault is mis-classified. When the fuzzy logic system is initially trained (i.e. when the set of rules is being created), there can sometimes be an imbalance between different classes resulting in some minority classes under-represented in the data. In some examples, the training phase can comprise using a Synthetic Minority Over-sampling Technique (SMOTE) to balance any imbalanced data in the training operating data. Using SMOTE to balance the data has been found to have a significant effect on reducing false negatives in the output data.

In some examples, misclassifications remaining after a SMOTE analysis are reduced by applying a boundary system. In an interval fuzzy set, a threshold can be used to reduce misclassification by activating the particular set only when the evidence supporting the classification meets or exceeds a threshold value. If the evidence does not meet the threshold value, the set will not be activated, and the classification will be based on the other available sets. For example, in a fuzzy classification system that is used to identify the chance of faults based on their severity, the system may use three interval fuzzy sets to represent normal, marginal, and severe chance of faults. With the boundary system, corresponding threshold values may be set as Tnormal = 0.3, Tmarginal = 0.5, and Tsevere = 0.7. For example, if the output of the fuzzy logic system is less than the threshold Tsevere, then the SEVERE interval fuzzy set would not be activated. In this case, the chance of fault would not be classified as SEVERE and the system might instead classify it as MARGINAL or NORMAL. Accordingly, in some examples, training the fuzzy logic system comprises selecting output classification thresholds to minimise false negative classifications.

It will be appreciated that the features described with reference to the training method, may equally be applied to the trained software model of the system after a period of self-learning. In some examples a BB-BC algorithm, SMOTE techniques, and/or boundary systems are applied to the set of rules at regular intervals. The intervals may be based on time in use and/or number of adapted rules in the set of rules.

### Detailed description

Certain preferred examples of this disclosure will now be described, by way of example only, with reference to the accompanying drawings, in which:
Figure 1 shows a known fuzzy logic system architecture;
Figure 2 shows a known type-2 fuzzy logic system architecture;
Figure 3 shows a schematic diagram of the pump monitoring system according to an example of the present disclosure;
Figure 4 shows an example dictionary according to an example of the present disclosure;
Figure 5 shows a flow-diagram of self-learning according to an example of the present disclosure;
Figure 6 shows a flow-diagram showing a method of predicting maintenance according to an example of the present disclosure; and
Figure 7 shows a flow-diagram showing a method of training a software model according to an example of the present disclosure.

The system of the present disclosure may employ a fuzzy-logic architecture as discussed above with reference to Figure 1 or Figure 2.

Fuzzy-logic systems have architectures like that shown in Figure 1. Where the fuzzy-logic system 10 comprises a fuzzifier 12, a rule base 14 (in which a set of rules is stored), an inference engine 16 and a defuzzifier 18. The fuzzifier 12 converts the data in the form of crisp inputs into fuzzy input sets. The rule base 14 stores a collection of IF "x"THEN *"y"* conditions. The inference engine 16 is configured to determine the degree to which the fuzzy input sets match the rule base 14. The defuzzifier 18 is configured to convert the fuzzy output set data produced by the inference engine 16 into output data comprising crisp output values. The rule base 14 of a fuzzy-logic system is known to operate in a similar way to other logic systems (i.e. similar to hypothetical propositions in philosophy), where the *"x"* is known as the antecedent and *"y"* as the consequent of the IF-THEN statement. Rules may have multiple antecedents and they may have multiple consequents. The example shown in Figure 1 is an example of a type-1 fuzzy logic system.

By incorporating an additional degree of uncertainty into type-1 membership functions the membership of a fuzzy-set can become a range of values rather than a precise number. This creates a three-dimensional membership function, also known as a type-2 membership function, which characterizes a type-2 fuzzy set. An example type-2 fuzzy system architecture 20 is shown in Figure 2. This type-2 fuzzy-logic system 20 also uses a fuzzifier 12 to fuzzify the crisp input data, however the fuzzy-input sets become three-dimensional, adding an additional level of uncertainty modelling to the system. The rule base 14 and inference engine 16 operate similarly to those of the type-1 fuzzy logic system 10 of Figure 1, however the process for producing crisp-outputs is slightly different. There are two possible options for defuzzification. In the first option, the type 2 fuzzy sets may be directly defuzzified to crisp values in a single step. In the second option, the fuzzy output set is first converted into a type-reduced set by the type reducer 19 which effectively turns it into a type-1 fuzzy which can then be processed by the defuzzifier 18 into crisp output values.

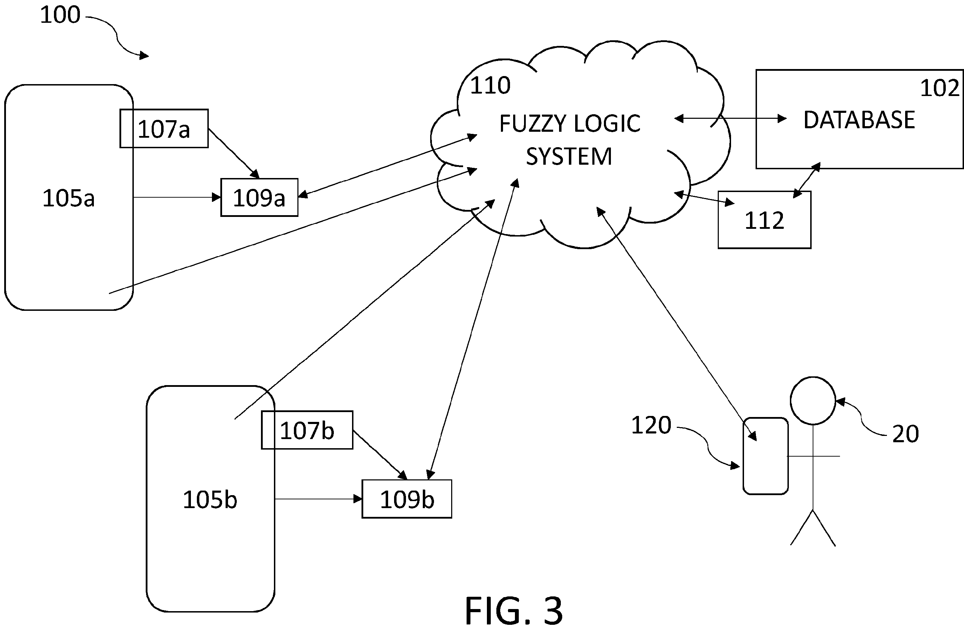

Figure 3 is a schematic diagram of an example pump monitoring system 100. Arrows between features are representative of pathways of communication, with some being one-way communication, and others being two-way communications. The system 100 monitors two pumping systems 105a, 105b, each with sensors 107a, 107b, and a local controller 109a, 109b. Whilst in this example the controllers 109a, 109b are shown separate to the pumping systems 105a, 105b, they may be integral to the pumping systems 105a, 105b and also arranged to control general pumping operation, or the pumping systems 105a, 105b may have separate controllers which control general pumping operation. The pumping systems 105a, 105b and sensors 107a, 107b send operating data to their respective controllers 109a, 109b, which in turn send the operating data to the fuzzy logic system 110. The fuzzy logic system 110 may be located on a cloud computing server and may be in bi-directional communication with a database 102. The controllers 109a, 109b may transmit the operating data in any known manner, including using long or short range wireless connections and/or wired connections or combinations thereof.

The fuzzy logic system 110 sends output data to a user interface 120. The user interface 120 in this example is a portable mobile device carried by a maintenance engineer 20, however the user interface can be any computer system such as a laptop, desktop, tablet, PDA or dedicated interface unit.

The fuzzy logic system 110 can use a fuzzy-logic architecture as shown in Figure 1 or Figure 2 to analyse operating data from the pumping systems 105a, 105b and to produce output data which can inform the user 20 of the current operating status of the pumping systems 105a, 105b, what type of maintenance may be required at the pumping systems 105a, 105b, and when that maintenance will be required.

The user interface 120 also allows the user 20 to provide feedback to the fuzzy logic system 110, e.g. after performing maintenance, e.g. after performing a site visit, inspecting a pumping system 105a, 105b, servicing or repairing a pumping system 105a, 105b, etc. This user feedback may be used for self-learning of the fuzzy logic system 110.

Some example faults which can be detected in pumping systems 105a, 150b with the systems described here include: low vessel pre-charge; a failure of a non-return valve; pump failure; and system leaks. Example set ups and scenarios of these types of faults are outlined below.

In buildings where constant water pressure is required, a booster set (or more than one) can be used which achieves a constant pressure by installing a pressure sensor in the pipework. When demand begins (e.g., when a tap is turned on), the water pressure in the system decreases and the pump is engaged to sustain pressure. When the demand ceases (for example, when the tap is turned off again) and the water pressure begins to rise, the pump can be ramped down and eventually turned off. In some examples a pressure vessel is also attached to the system which acts as a buffer for the booster set and is typically filled with half air and half water.

Typically, the vessel pre-charge pressure is designed to be 10% lower than the pump's cut-off pressure. For example, if the pump's cut off pressure is 8 Bar, then the vessel pre-charge pressure should be 7.2 Bar. A fault is considered when this vessel pre-charge pressure goes low. When the pre-charge in a water booster set vessel goes low, it can result in reduced water flow and pressure, as well as reduced system efficiency. This can lead to a variety of problems, including:
- Difficulty meeting water demand: If the pre-charge is too low, the system may struggle to deliver enough water to meet demand. This can result in low water pressure and long wait times for hot water.
- Increased energy consumption: A low pre-charge can cause the pump to work harder to deliver water, which can result in increased energy consumption and higher energy bills.
- Shortened pump life: When the pre-charge is low, the pump may be required to run more often, which can shorten its lifespan.
- "Water hammer": If the pre-charge is too low, the pump may experience "water hammer", which is a loud banging noise that can occur when water rapidly accelerates through a pipe. This can disturb users and damage pipelines and fittings.

An increase in the booster set pressure range and the frequency of pump start/stop times can be used to detect such faults. The frequency of pump start/stop, and the pressure range can be detected using a current sensor and a pressure sensor respectively. The fuzzy logic system 110 can therefore use inputs from current and pressure sensors to analyse the vessel pre-charge and determine when a fault may be present. Such a fault can be output to a user by stating "vessel pre-charge low".

A non-return valve (NRV) can be used to prevent the flow of fluid in a first undesired direction, whilst allowing fluid to flow in a second desired direction. NRVs are commonly used in water supply systems, irrigation systems, and sewage systems. If an NRV fails, several problems can occur, including:
- Water leakage: If the NRV fails to prevent backflow, water may leak out of the system, potentially causing damage to surrounding areas.
- Water contamination: If an NRV fails and allows backflow, it can result in the contamination of the water supply, potentially leading to illness or other health issues.
- Increased pressure: If an NRV fails and allows backflow, it can result in an increase in pressure within the piping system, which can cause damage to pipes, fittings, and other components.

Generally, NRVs make noise when they fail. By accurately detecting the acoustic signals from the NRV a fault can be detected. An increase in the frequency of pump start/stop and the amplitude of acoustic signal over time can be used to detect this fault. Current and acoustic sensors can be used to detect the frequency of pump start/stop and the amplitude of an acoustic signal, respectively.

An acoustic sensor can be attached to the base of a water booster set to monitor noise and detect NRV faults. The presence of low frequency acoustic waves (<1000Hz) indicates proper functioning of the pump, while the presence of high frequency acoustic waves (>2000Hz) suggests the presence of additional noise, likely due to a faulty NRV in the pump system's piping. The data from these sensors can therefore be input into the fuzzy logic system 110, where fuzzy rules which classify high frequency acoustic waves as "SEVERE" can be utilised to give outputs regarding the state of an NRV.

Pump failure in a water booster set means that the pump can no-longer function properly and deliver water as intended. Pump failure can occur for a variety of reasons, such as mechanical failure, electrical issues, or problems with the pump's seals or bearings. If pump failure occurs in a water booster set, it can result in several problems, including:
- Reduced water flow and pressure: If the pump fails, it will be unable to deliver water, resulting in reduced flow and pressure throughout the system. This can lead to issues such as low water pressure, long wait times for hot water, and difficulty meeting water demand.
- Increased energy consumption: If the pump is struggling to function properly due to failure, it may consume more energy in order to deliver water. This can result in higher energy bills and increased energy consumption.
- Shortened pump lifespan: Pump failure can shorten the lifespan of the pump, as it may be required to work harder in order to function properly. This can result in the need for frequent repairs or replacement of the pump.

A vibration sensor can be used to monitor the pumps for an extended period of time in order to identify any potential issues. For example, the ISO 10816 Vibration Severity Standards provide guidelines for evaluating the severity of vibrations in machines that operate within the 10 to 200Hz frequency range (600 to 12,000 RPM). The vibration velocity can be classified to allow for the assessment of the overall vibration severity, helping to identify any potential issues and take appropriate action to address them.

A vibration sensor can be attached to the base of a water booster set and signal processing techniques can be used to extract useful information and patterns from a signal that may not be immediately apparent in the raw data.

To analyse the frequency of a signal, vibration time domain data can be collected over a specific time interval, discretized, and then decomposed into individual frequency waves using a Fast Fourier Transform (FFT). Data sampling techniques based on windowing can also be applied to obtain reliable frequency domain data which can reduce the effects of spectral leakage which might occur during the process.

By using FFT for frequency domain analysis it is possible to pinpoint the root cause of a problem by analysing the frequencies and amplitudes of the frequency spectrum. The frequency spectrum is essentially a signature of the rotating equipment and can provide insight into the specific types of faults that may be present. For example, a high vibration amplitude at the rotation speed may indicate motor imbalance, while bearing degradation and gear mesh faults tend to produce vibrations at specific high frequencies that are determined by the equipment's geometry. Common faults that can be identified using FFT spectral frequency analysis, include cavitation, unbalance, bearing failure, and water hammer. The FFT spectral analysis can be performed on controllers 109a, 109b shown with reference to Figure 3, before sending preprocessed data to the fuzzy logic system 110.

An increase in the frequency of pump start/stop and the amplitude of vibration signal using FFT techniques can be used to detect pump failure. Current and vibration sensors can be used to detect the frequency of pump start/stop and the amplitude of vibration, respectively.

System leak(s) in water booster and pressurisation units refers to the loss of water from the system due to a leak or fault in the system. This can occur in various parts of the system, such as the pump, motor, or pressure tank. A system leak can cause a drop in water pressure, leading to reduced water flow and insufficient water supply to the building or home.

Leaks in a system can happen for several reasons, for example, when a component is broken or worn out, if installation was incorrectly performed, or if corrosion has set in. It is important to regularly maintain and check water booster and pressurisation units to make sure they are working properly and to find and fix any system leaks as soon as possible. Ignoring system leaks can lead to further damage to the system and costly repairs.

An increase in the frequency of pump start/stop and the constant running of pumps over time can be used to detect system leaks. This can be detected using only a current sensor to detect the frequency of pump start/stop and the constant running of pumps.

Data output from current sensors, acoustic sensors and pressure sensors as outlined here can be used as inputs to the fuzzy logic system 110. The fuzzy logic system 110 can then apply rules based on these variables to provide outputs regarding the possible fault type and predicted time to failure.

For example, for the chance of vessel pre-charge low fault the antecedents of some fuzzy logic rules can include linguistic variables for i) pressure range, ii) frequency of pump start/stop events and iii) score of fault occurrence. Each of these antecedents is represented by three fuzzy sets (representing Low, Medium and High), and the output or consequent of the fuzzy logic system 110 is the chance of vessel pre-charge low fault.

Similarly, the antecedents for the chance of a non-return valve failure fault can include linguistic variables for i) average amplitude of acoustic signals, ii) frequency of pump start/stop events, and iii) score of fault occurrence. Each of these antecedents is represented by three fuzzy sets (representing Low, Medium and High) and the output or consequent of the fuzzy logic system 110 is the chance of a non-return valve failure fault.

The antecedents for the chance of pump failure fault can include linguistic variables for i) average amplitude of vibration, ii) pressure range and iii) score of fault occurrence. Each of these antecedents is represented by three fuzzy sets (representing Low, Medium and High) which are and the output or consequent of the fuzzy logic system 110 is the chance of pump failure fault.

Finally, for the chance of a system leak fault, the antecedents can include linguistic variables for i) status of constant pump operation from the current sensor, ii) frequency of pump start/stop events and iii) score of fault occurrence. Each of these antecedents is represented by three fuzzy sets (representing Low, Medium and High) and the output or consequent of the fuzzy logic system 110 is the chance of system leak fault.

In each of the above, score of fault occurrence may be calculated slightly differently as it varies according to the fault type. The score of fault occurrence for pump failure fault may be generated based on the values of the amplitude of vibration. For non-return valve failure fault the score of fault occurrence may be generated based on the amplitude of acoustic data. For vessel pre-charge low failure the score of fault occurrence may be generated based on pump pressure data. Finally, for system leak fault, the score of fault occurrence may be generated based on constant running via current sensor data.

Each of these faults can be represented as an output fuzzy set which can be output to the database 102. These outputs can be more easily interpreted by a user via a dictionary.

It will be appreciated that the above descriptions are only examples and that different combinations of sensor data, or different derivatives of sensor data (e.g. averages over different time scales) can also be used in providing evidence of faults. Rules may combine different inputs (antecedents) in different ways. By way of example two rules that may be used in determining pump failure in one particular example are as follows:

| Rule | Antecedents | | | Consequents |
|---|---|---|---|---|
| 1 | 5 hr amplitude of vibration is Low | 8 hr score of fault occurrence is Medium | 4 hr pump pressure is Low | Chance of pump failure in next 4 hours is Normal |
| 2 | 6 hr pump pressure is Medium | 9 hr amplitude of vibration is High | 7 hr score of fault occurrence is High | Chance of pump failure in next 4 hours is Severe |

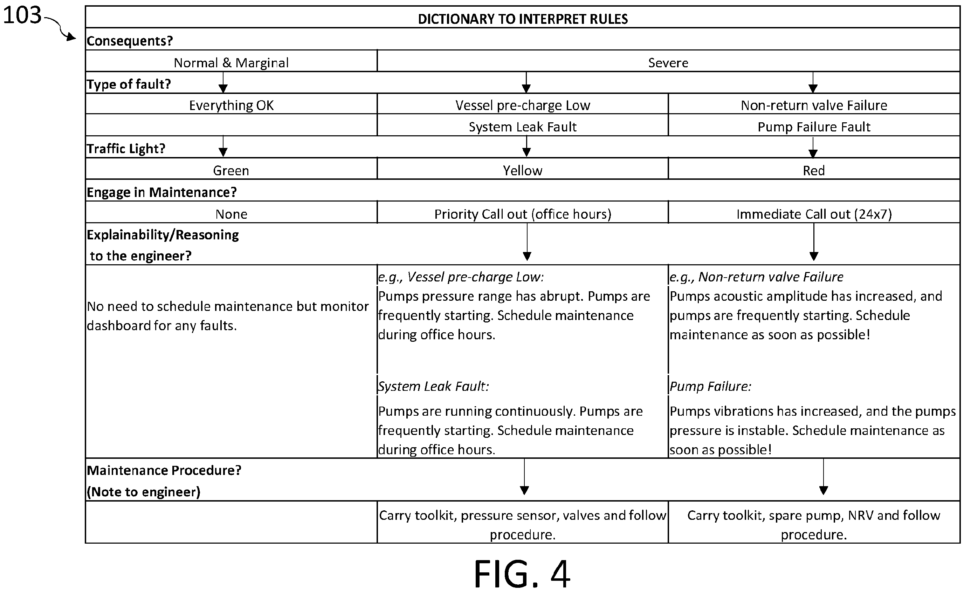

Figure 4 shows an example dictionary 103 that may be used by the database 102 to interpret the output data from the fuzzy logic system 110 to provide an additional layer of explainability to the results. As discussed above, the fuzzy logic system 110 is itself a highly explainable AI as any output can be traced back through the rules that were activated. As those rules are generally expressed in fuzzy terms with linguistic labels, they are easily interpretable by a human user to reveal the reasons for a particular decision. However, this can be extended using a rule post-processing engine 112 which can provide a more detailed and more readable output for the engineer. The rule post-processing engine 112 may include a dictionary 103 (which may more generally be a look-up table) which may be stored in the database 102. The rule post-processing engine 112 may take the outputs from the fuzzy logic system 110 and use those to look up in the dictionary 103 in the database 102 a suitable output for the user. As an example, if the pumping system 105a is operating normally, no maintenance is required or yet anticipated, so no maintenance is advised.

In Figure 4, the dictionary 103 shows that the outputs of the fuzzy logic system are the consequent that the status is "Normal & Marginal" and the fault type is "Everything OK". The left-hand column in Figure 4 shows that the dictionary 103 returns a traffic light colour green, a recommendation that no maintenance is required and an explanation that there is no need to schedule maintenance but to continue to monitor for faults. As another example, if pumping system 105b has detected low pressure at a given location, the fuzzy logic system 110 outputs a consequent of "Severe" and a fault type as "Vessel pre-charge Low, System Leak Fault". When these are looked up in dictionary 103, the dictionary returns the middle column of Figure 4 indicating a traffic light colour yellow, a recommendation to schedule a non-urgent visit from a maintenance worker in office hours, and provides specific information about the predicted fault, namely that the vessel pre-charge is low and an linguistic explanation of why that conclusion has been reached based on an abrupt change in pressure range has been detected and an increase in pump start/stops has been detected. Additionally, a system leak has been detected with corresponding explanation of how the conclusion has been reached. At the bottom of the middle column, the dictionary 103 informs the engineer what tools and parts should be carried to ensure a reliable fix in a single visit. Finally, the righthand column of Figure 4 shows a severe fault that needs an immediate callout. A non-return valve failure and a pump failure have been predicted which need to be remedied immediately. Again, the engineer is informed about the tools and parts to carry for an efficient maintenance visit.

The rule post-processing engine 112 may also produce information for the user regarding a repair process for a "yellow" or "red" indicated fault which can be sent to the maintenance worker 20 via the user interface 120. This may include a list of tasks or instructions to be performed to repair or replace a given component, or it may be indicated via a flow-diagram. In some examples, the information may use Business Process Model and Notation (BPMN) to inform the maintenance worker 20 of the repair process.

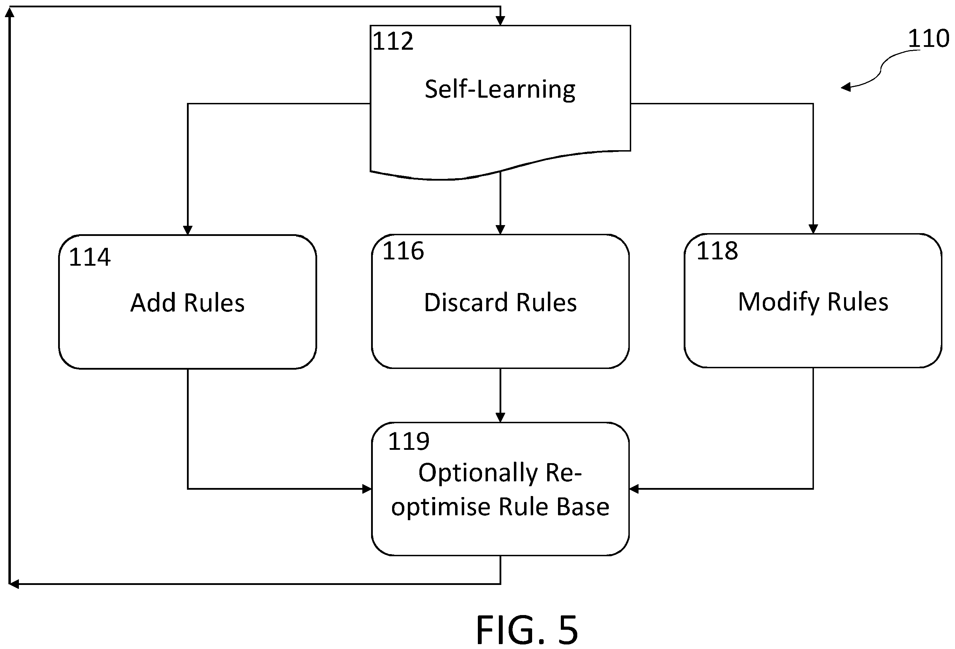

Figure 5 is a flow-diagram showing how the fuzzy logic system 110 can perform self-learning 112. As shown in Figure 3, data can be fed to the fuzzy logic system 110 from a variety of locations, including the pumping systems 105a, 105b, the controllers 109a, 109b, and the user interface 120. After analysing data fed back to the fuzzy logic system 110, the system can perform self-learning by adding rules 114, discarding rules 116, or modifying rules 118. These actions can be performed in isolation or in combination due to a particular feedback, for example the liquid pumping system 105a feeding back that a particular valve has been changed. After a period of self-learning 112 the rule-base of the fuzzy-logic system 110 can be re-optimized, for example using a BB-BC algorithm as discussed above. This may occur periodically (e.g. every 6 months or year), or after a certain number of rule adaptations (e.g. after 50 rule changes, or 100 rule changes).

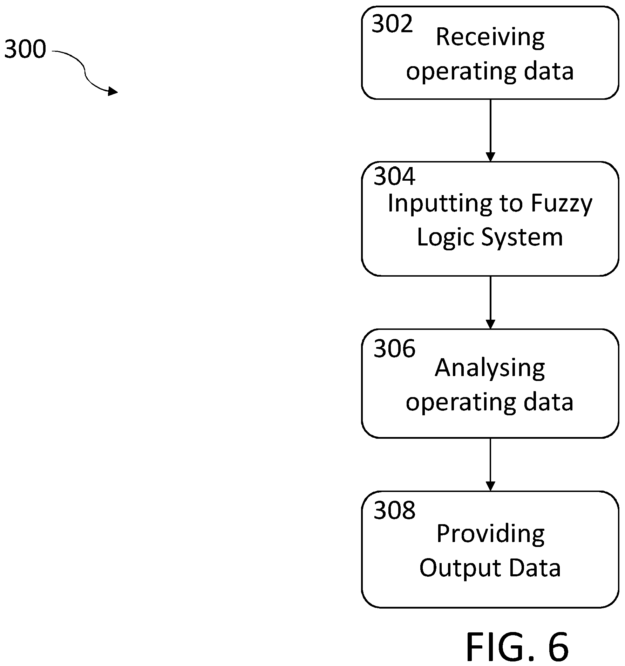

Figure 6 is a flow-diagram showing a method 300 of predicting maintenance in at least one pumping system, as described previously with reference to Figures 3 and 4. In step 302 operating data is received from at the pumping system (s). This data can be received directly from the pumping system(s) or via sensors which monitor the pumping system(s). At step 304 the operating data is input into the fuzzy logic system 110. The fuzz logic system 110 then analyses the operating data at step 306. At step 308 output data is then provided. The output data is indicative of a current status of the pumping system (s). During this process the fuzzy-logic system 110 also performs self-learning as described with reference to Figure 5.

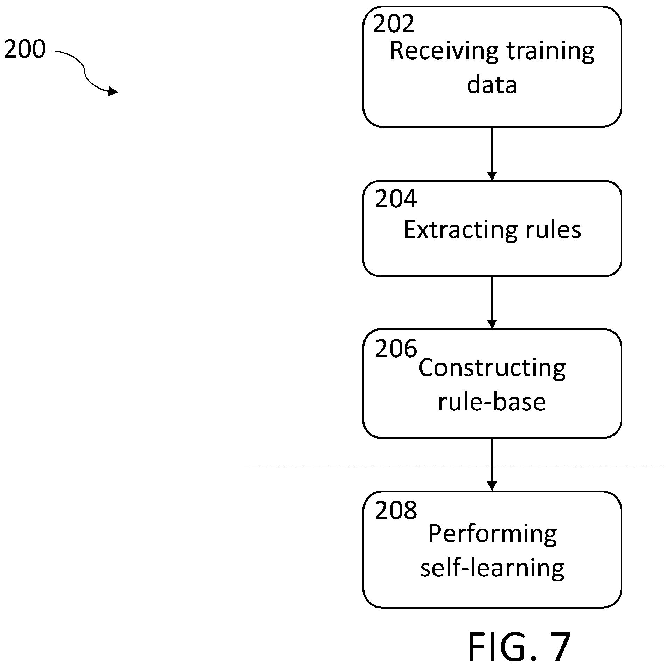

Figure 7 is a flow diagram showing a method of training 200 for the fuzzy logic system 110 of Figure 3. The training process 200 consists of an initial training phase (steps 202, 204, 206) before the fuzzy logic system 110 is implemented with real pumping systems, and a self-learning phase (step 208) which can happen whilst the fuzzy logic system 110 is in operation. The first step 202 includes receiving training data. The training data should include pumping system operating data like that expected during operation, along with corresponding pre-determined output data. In step 204 rules are extracted from the supplied training data, and then the rule base is constructed in step 206. Constructing the rule base may involve the optimisation stage (e.g. using a BB-BC algorithm) as discussed above. The whole rule-base is designed to provide the intelligence for the fuzzy logic system. The fuzzy logic system can then be implemented, as represented by the dashed line in the figure. After implementation, the software model continues to be trained via self-learning at step 208 as described with reference to Figure 5.

It will be appreciated by those skilled in the art that the invention has been illustrated by describing one or more specific examples thereof, but is not limited to these examples; many variations and modifications are possible, within the scope of the accompanying claims.

## Claims

1. A pump monitoring system for monitoring at least one pumping system; the system comprising:
a fuzzy logic system configured to:
receive operating data associated with the at least one pumping system; and
analyse the operating data using fuzzy-logic to provide output data indicative of a current status of at least one pumping system;
wherein the fuzzy logic system comprises a set of rules; and
wherein the fuzzy logic system is configured to perform self-learning whilst in operation by adjusting the set of rules.

2. A system as claimed in claim 1, wherein adjusting the set of rules comprises at least one of:
i) adding at least one new rule to the set of rules;
ii) discarding at least one rule from the set of rules; and
iii) modifying at least one rule in the set of rules.

3. A system as claimed in claim 1 or 2, wherein the system is configured to receive user feedback and to perform the self-learning based on the user feedback; and/or
wherein the system is configured to perform the self-learning based on operating data received from at least one pumping system.

4. A system as claimed in any preceding claim, wherein the system is arranged to monitor the frequency of activation of each rule in the set of rules.

5. A system as claimed in claim 4, wherein the self-learning comprises discarding a rule with a frequency under a frequency threshold.

6. A system as claimed in claim 5, wherein each rule is associated with a level of importance; and wherein rules with different levels of importance have different frequency thresholds.

7. A system as claimed in any preceding claim, wherein the system is configured to monitor a plurality of pumping system in a plurality of locations.

8. A system as claimed in any preceding claim, wherein the system further comprises one or more sensors configured to acquire the operating data from the at least one pumping system; and
optionally, wherein the one or more sensors comprises one or more of: a pressure sensor, a temperature sensor, a vibration sensor, an acoustic sensor, a flow rate sensor, and a current sensor.

9. A system as claimed in any preceding claim, further comprising at least one controller configured to collect the acquired operating data from the or each pumping system and transmit the operating data to the fuzzy logic system; and
optionally wherein the controller is further configured to pre-process at least some of the acquired operating data before transmitting the operating data to the fuzzy logic system; and
optionally wherein the controller is configured to pre-process the acquired operating data using a Fast Fourier Transform.

10. A system as claimed in any preceding claim, wherein the output data comprises data representative of required maintenance.

11. A system as claimed in any preceding claim, wherein the system further comprises a rule post-processing engine; wherein the rule post-processing engine comprises a look-up table; wherein the look-up table comprises associations between rules of the set of rules and maintenance explanations and/or recommendations; and wherein the system is arranged to use the look-up table together with activated rules from the set of rules to provide maintenance explanations and/or recommendations to the user.

12. A system as claimed in any preceding claim, wherein the output data comprises values and/or linguistic information representative of a level of severity of a predicted fault.

13. A system as claimed in any preceding claim, wherein the output data further comprises information for a user including at least one of: an explanation of a cause of a fault and/or failure; and/or suggestions as to what part of the pumping system may need replacing; and/or suggestions as to what equipment may be required by an engineer to perform any required maintenance; and/or a suggested repair process.

14. A method of predicting maintenance in at least one pumping system, the method comprising:
receiving operating data from at least one pumping system;
inputting the operating data into a fuzzy-logic system;
analysing the operating data using fuzzy-logic; and
providing output data indicative of a current status of the at least one pumping system;
wherein the fuzzy logic system comprises a set of rules; and
wherein the fuzzy logic system performs self-learning whilst in operation by adjusting the set of rules.

15. A method of training a fuzzy logic system, the method comprising an initial training phase comprising:
receiving training operating data relating to at least one pumping system, the training operating data comprising operating data with associated maintenance information;
extracting a plurality of fuzzy-rules from the training operating data; and
constructing a set of rules for the fuzzy logic system from the plurality of fuzzy-rules;
wherein the method further comprises a self-learning phase comprising:
receiving user feedback while in operation; and
adjusting the set of rules based on the user feedback; and optionally,
wherein the method further comprises optimising the set of rules using a big-bang big-crunch optimization algorithm; and/or
wherein training the fuzzy logic system comprises selecting output classification thresholds to minimise false negative classifications.
